# EUROPÄISCHE PATENTANMELDUNG

(11) **EP 0 923 219 A1**
(43) Veröffentlichungstag der Anmeldung: **16.06.1999**
(21) Anmeldenummer: 98440257.8
(22) Anmeldetag: 13.11.1998
(51) Int. Cl.: H04M 3/38, H04M 1/66

(54) **Verfahren zum unterschiedlichen Behandeln besonders gekennzeichneter Anrufe sowie eine Behandlungseinheit, eine Vermittlungsstelle und ein Fernmeldeendgerät dafür**

(30) Priorität: 11.12.1997 DE 19754994
(71) Anmelder: ALCATEL, 75008 Paris (FR)
(72) Erfinder: Reher, Norbert, 70806 Kornwestheim (DE)
(74) Vertreter: Brose, Gerhard, Dipl.-Ing.

(57) **Zusammenfassung**

Die Erfindung betrifft ein Verfahren zum unterschiedlichen Behandeln besonders gekennzeichneter Anrufe mit den Schritten:
- Erkennen eines Anrufs
- Feststellen, ob ein Erkennungszeichen nachgewählt wird
- Überprüfen, ob das Erkennungszeichen einer vorbestimmten Gruppe von Erkennungszeichen angehört
- Entscheidung für eine vorbestimmte Reaktion oder für eine Standardreaktion
- Durchführen der Reaktion,
sowie eine Behandlungseinheit (D), eine Vermittlungsstelle und ein Fernmeldeendgerät (C).

## Beschreibung

Die Erfindung betrifft ein Verfahren zum unterschiedlichen Behandeln besonders gekennzeichneter Anrufe, sowie eine Behandlungseinheit, eine Vermittlungsstelle und ein Fernmeldeendgerät zur Durchführung dieses Verfahrens.

Die Erreichbarkeit von Telephonteilnehmern hat sich durch Mobiltelephone, tragbare Telephone und automatische Rufum- und -weiterleitung stark erhöht. Einerseits ist das Telephon dadurch häufiger Quelle von Belästigungen, andererseits sind damit auch zum Teil nicht erkennbare zusätzliche Kosten verbunden. Es sind deshalb Maßnahmen bekannt, um sowohl diese Belästigungen, als auch diese zusätzlichen Kosten zumindest teilweise in den Griff zu bekommen. Hierzu werden vor allem Rufnummernsiebe, teils in Verbindung mit Zeitschaltungen, verwendet, um Anrufe (abgekürzt auch Rufe genannt) in vorbestimmter Weise zu behandeln. Eine solche unterschiedliche Behandlung kann darin liegen, daß beispielsweise bei Nacht besonders wichtige Anrufe durchgestellt werden, weniger wichtige auf den Anrufbeantworter geschaltet werden und der Rest unterdrückt wird. Bei Tag kann unterschieden werden zwischen Weiterleiten auch in den Fernbereich, Weiterleiten nur im Nahbereich und Schalten auf den Anrufbeantworter.

Diese bekannten Unterscheidungsmöglichkeiten setzen voraus, daß in irgendeiner Weise die Rufnummer des Anrufers in elektronisch verwertbarer Form zu Beginn des Anrufs übertragen wird. Ein Anrufer, der an sich berechtigt ist, auf Kosten des Angerufenen in den Fernbereich weitergeleitet zu werden, kann in weniger wichtigen Fällen nicht einmal darauf verzichten. Auch ist eine solche Berechtigung tatsächlich nicht an eine Person, sondern an einen Apparat gebunden. Damit können einerseits auch Unberechtigte bevorzugt behandelt werden, andererseits kann ein Berechtigter nicht von unterwegs seine Berechtigung geltend machen.

Hier schafft die Erfindung Abhilfe durch ein Verfahren nach der Lehre des Anspruchs 1, eine Behandlungseinheit nach der Lehre des Anspruchs 3, eine Vermittlungsstelle nach der Lehre des Anspruchs 4 und ein Fernmeldeendgerät nach der Lehre des Anspruchs 5.

Gemäß der Erfindung wird demnach eine sogenannte PIN (Personal Identification Number) verwendet, die beispielsweise von jedem beliebigen Apparat durch Nachwahl eingegeben werden kann, die aber nur der Berechtigte kennt. Die apparativen Einrichtungen hierzu können sowohl in einer separaten Behandlungseinheit untergebracht sein, beispielsweise in einem Zusatzgerät, das dem Telephon des Nutzers dieser Einrichtung vorgeschaltet ist, als auch in dessen Teilnehmervermittlungsstelle oder in einem seiner Fernmeldeendgeräte. Im wesentlichen wird die Erfindung programmgesteuert realisiert werden. Es ist deshalb auch eine Anwendung der Erfindung im Intelligenten Netz als Dienstleistung möglich.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:

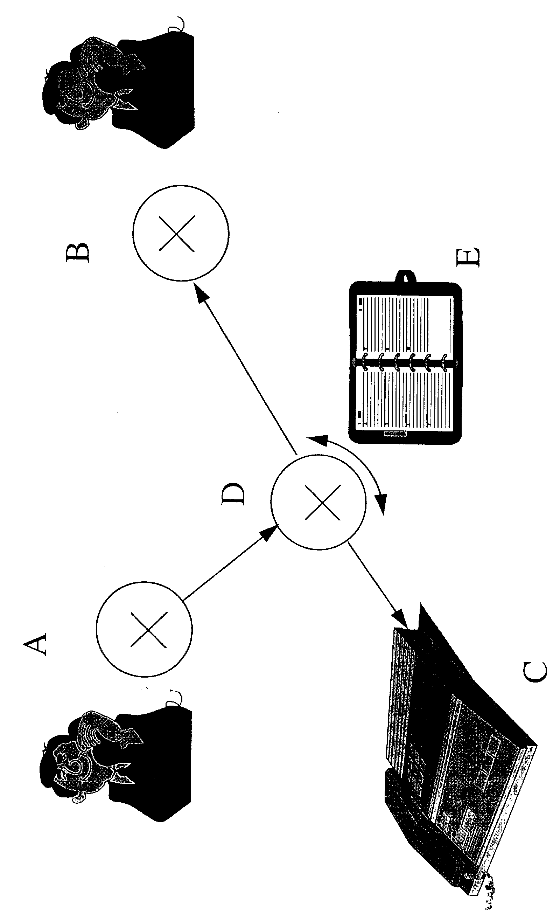

- Figur 1: zeigt ein Szenario, in dem das erfindungsgemäße Verfahren mit erfindungsgemäßen Mitteln durchgeführt wird.

Figur 1 zeigt sehr symbolisch zwei Teilnehmer A und B mit Telekommunikationsausrüstungen, die ebenfalls mit A und B gekennzeichnet sind. Weiter enthält Figur 1 ein Fernmeldeendgerät C, das dem Teilnehmer B gehört, und eine erfindungsgemäße Behandlungseinheit D mit einer separat dargestellten Entscheidungsliste E.

Nun versucht ein beliebiger Teilnehmer A, den Teilnehmer B zu einer Zeit telephonisch zu erreichen, zu der der Teilnehmer B unterwegs und nur für dringende Fälle mittels einer Rufumleitung unter der Telephonnummer eines Kunden erreichbar ist. Dieser Ruf des Teilnehmers A geht nun an die Behandlungseinheit D, die dem Teilnehmer B zumindest zugeordnet ist, wenn nicht ihm gehört. Hat nun dieser anrufende Teilnehmer A keine besondere Berechtigung oder hat er zwar eine solche, weist sich aber nicht damit aus, weil er sie im Augenblick nicht geltend machen will, so geht sein Anruf an das Fernmeldeendgerät C, das ja gerade nicht besetzt ist. Ist das Fernmeldeendgerät C mit einem Anrufbeantworter ausgestattet, so kann eine Nachricht hinterlassen werden, andernfalls geht der Ruf ins Leere.

Hat dagegen dieser anrufende Teilnehmer A eine besondere Berechtigung und will sie auch geltend machen, so wählt er erfindungsgemäß eine mit dem Teilnehmer B vereinbarte Zahlenkombination als Erkennungszeichen nach. Dieses Erkennungszeichen wird in der Behandlungseinheit D anhand der Entscheidungsliste E ausgewertet. In der Entscheidungsliste E ist vermerkt, ob mit dem erhaltenen Erkennungszeichen die Berechtigung verbunden ist, auch zu dieser Zeit (z.B. Uhrzeit, Wochentag) und auch unter den gegebenen Umständen (gerufener Teilnehmer ist nur über einen Dritten erreichbar) weitergeleitet zu werden oder nicht. Je nach der erkannten Berechtigung wird nun von der Behandlungseinheit D entweder das Durchschalten auf das Fernmeldeendgerät C oder die Weiterleitung des Rufs veranlaßt.

Der Teilnehmer A kann mit dem Teilnehmer B auch mehr als eine Zahlenkombination vereinbart haben. Damit kann dann der Teilnehmer A jeweils entscheiden, wieweit er die ihm gegebene Berechtigung in Abhängigkeit von der Wichtigkeit und Dringlichkeit seines Anrufs geltend machen will.

An sich genügt es, wenn für jede Art der Berechtigung mit allen gleichermaßen berechtigten Teilnehmern dieselbe Zahlenkombination vereinbart wird. Um jedoch die Berechtigungen auch zu ändern, insbesondere diese einzeln zurückzunehmen, sind individuelle Zahlenkombinationen vorzuziehen. In der Anwendung macht dies keine Probleme, da hierfür heutzutage ohnehin nur programmgesteuerte Auswertungen in Betracht gezogen werden, wo dann die Entscheidungslisten nur noch elektronische Datenspeicher sind.

Primär setzt die Erfindung auf eine manuell mögliche Nachwahlmöglichkeit, um den Inhaber einer damit verbundenen Berechtigung in die Lage zu versetzen, diese Berechtigung auch von Fremdapparaten aus zu nutzen. Dafür geeignete Apparate mit Mehrfrequenzwahl sind sehr verbreitet; auch ist es möglich, mittels eines Zusatzgeräts solche Mehrfrequenzwahltöne auch akkustisch einzuspeisen. Es soll aber nicht ausgeschlossen werden, daß das Erkennungszeichen automatisch eingespeist wird, wenn die Wahl mit Hilfe eine Zielwahltaste oder einer vergleichbaren Einrichtung erfolgt. In diesem Fall ist auch eine an die Wahl anschließende Übertragung beispielsweise durch ISDN-Signalisierung, alternativ oder ausschließlich, als solche Nachwahl geeignet. Selbstverständlich sind in diesem Fall die Erkennungszeichen nicht auf Zahlenkombinationen beschränkt.

Die Behandlungseinheit D kann eine selbständige Einheit sein, die beim Teilnehmer B in die Leitung zu seinem Fernmeldeendgerät C eingeschleift ist. Allerdings muß dann eine Möglichkeit geschaffen sein, um von hier aus beispielsweise eine Weiterleitung überhaupt möglich zu machen. Bei kleineren Hausanlagen kann dies durchaus gegeben sein. Auch ist die Weiterleitung nicht die einzige Möglichkeit, die mit einer erfindungsgemäßen Behandlungseinheit D eröffnet werden soll.

Die Behandlungseinheit D kann aber auch in das Fernmeldeendgerät C integriert sein, um beispielsweise zwischen einem ebenfalls integrierten Anrufbeantworter und dem Telephon selbst umzuschalten, insbesondere den Wecker zu aktivieren oder zu deaktivieren.

Die Behandlungseinheit D kann aber auch Teil des Fernmeldenetzes, insbesondere der Vermittlungsstelle sein, an die der Teilnehmer B angeschlossen ist. In diesem Fall wird die Behandlungseinheit D bevorzugt für mehrere Teilnehmer gemeinsam vorgesehen sein. Auch eine Realisierung als Bestandteil des Intelligenten Netzes ist möglich. Insbesondere im letzten Fall ist die Behandlungseinheit D letztlich nur ein Programmteil im Rechner des diesen Dienst anbietenden Diensteanbieters.

## Patentansprüche

1. Verfahren zum unterschiedlichen Behandeln besonders gekennzeichneter Anrufe mit den Schritten:
- Erkennen eines Anrufs
- Feststellen, ob ein Erkennungszeichen nachgewählt wird
- Überprüfen, ob das Erkennungszeichen einer vorbestimmten Gruppe von Erkennungszeichen angehört
- Entscheidung für eine vorbestimmte Reaktion oder für eine Standardreaktion
- Durchführen der Reaktion.

2. Verfahren nach Anspruch 1, dadurch gekennzeichnet, daß durch das jeweils festgestellte Erkennungszeichen eine bestimmte von mehreren vorbestimmten Reaktionen ausgelöst wird.

3. Behandlungseinheit (D) zum unterschiedlichen Behandeln besonders gekennzeichneter Anrufe mit Mitteln zum Erkennen eines Anrufs, zum Feststellen, ob ein Erkennungszeichen nachgewählt wird, zum Überprüfen, ob das Erkennungszeichen einer vorbestimmten Gruppe von Erkennungszeichen angehört, zur Entscheidung für eine vorbestimmte Reaktion oder für eine Standardreaktion und zum Durchführen der Reaktion.

4. Vermittlungsstelle mit einer Behandlungseinheit (D) zum unterschiedlichen Behandeln besonders gekennzeichneter Anrufe, mit Mitteln zum Erkennen eines Anrufs, zum Feststellen, ob ein Erkennungszeichen nachgewählt wird, zum Überprüfen, ob das Erkennungszeichen einer vorbestimmten Gruppe von Erkennungszeichen angehört, zur Entscheidung für eine vorbestimmte Reaktion oder für eine Standardreaktion und zum Durchführen der Reaktion.

5. Fernmeldeendgerät (C) mit einer Behandlungseinheit (D) zum unterschiedlichen Behandeln besonders gekennzeichneter Anrufe, mit Mitteln zum Erkennen eines Anrufs, zum Feststellen, ob ein Erkennungszeichen nachgewählt wird, zum Überprüfen, ob das Erkennungszeichen einer vorbestimmten Gruppe von Erkennungszeichen angehört, zur Entscheidung für eine vorbestimmte Reaktion oder für eine Standardreaktion und zum Durchführen der Reaktion.
